# EUROPEAN PATENT APPLICATION

(11) **EP 2 684 786 A1**
(43) Date of publication of application: **15.01.2014**
(21) Application number: 12176428.6
(22) Date of filing: 13.07.2012
(51) Int. Cl.: B62J 9/00

(54) **A pannier with an attachment arrangement**

(71) Applicant: Thule IP AB, 214 31 Malmö (SE)
(72) Inventor: Gibson, Gary, 9013 Dunedin (NZ); Maguire, Patrick David, 9011 Dunedin (NZ); Noer, Michael, Stillwater, 55082 (US)
(74) Representative: Valea AB

(57) **Abstract**

The present invention relates to a kit of a pannier (10) and an attachment arrangement (22, 26) for attaching the pannier (20) to a bicycle (1). A first connection arrangement (15, 16) for providing a first connection to the bicycle (1), a second connection arrangement (20, 21, 22, 23) providing a second connection to the bicycle (1). The second connection arrangement comprises a metal plate (20, 21) arranged on the wall (13) of the pannier (10), and the attachment arrangement comprises;
a magnet (22, 23), wherein the magnet (22, 23) is configured to be attached to the bicycle (1) to cooperate in a retaining manner with the metal plate (20, 21) of the second connection arrangement, to connect the pannier (10) to the bicycle (1). The kit enables an easy connection and removal using few components.

## Description

### TECHNICAL FIELD

The present invention relates to a pannier and an attachment arrangement for a pannier, together forming a kit, to attach the pannier to a bicycle.

### BACKGROUND OF THE INVENTION

Panniers for bicycles are usually connected to the bicycle using hooks or other mechanical mounting means. One mounting system is disclosed in US patent No. US 2010108729. The mounting system comprises a first connection arrangement with two hooks for attaching the pannier to a bar of the bicycle. A second connection arrangement is adapted to retain the lower part of the pannier and comprises a snap on coupling.

Bicycle panniers, or panniers, are widely used as they provide an increased loading capacity. Sometimes it however is desirable to remove the pannier, if a user wish park the bicycle and walk for example, and still maintain the same level of loading capacity. To simplify the connection and removal of a pannier, efforts have been made to provide a connection arrangement which can be easily mounted and dismounted. The mounting system is however are however very space consuming, as the hooks are protruding from the surface of the pannier and can get caught or snared in the users cloths for example.

The published patent application US 2010/0237120 A1 disclose a pannier for a bicycle having a support plate with a first securing part attached on or embedded in the support plate. A second securing part is attached to the bicycle. At least one of the first or second securing parts can be a permanent magnet, while the first securing part is a permanent magnet or a ferromagnetic material. The connection arrangement of the pannier is rather clumsy in terms of that it requires multiple components and a very precise mounting of the pannier to provide for a secure attachment.

### SUMMARY

It is an object of the present invention to provide for a kit of a pannier and an attachment arrangement for attaching the pannier to a bicycle which solves at least one of the above mentioned drawbacks, or which reduces at least one of the drawbacks, or to provide for a useful alternative. The pannier comprises a wall defining a void, a first connection arrangement providing a first connection to the bicycle and a second connection arrangement providing a second connection to the bicycle. The second connection arrangement comprises a metal plate arranged on the wall of the pannier. The attachment arrangement comprises a magnet, wherein the magnet is configured to be attached to the bicycle to cooperate in a retaining manner with the metal plate of the second connection arrangement, to connect the pannier to the bicycle.

The present invention provides for a pannier which is made from few components, is a sturdy configuration and which can be attached to the bicycle in a simple, yet robust manner. The second connection arrangement can be positioned at the lower end of the pannier, to retain the lower end of the pannier to the bicycle after being mounted to the bicycle. The first connection arrangement can be positioned at the upper end of the pannier, to retain the upper end of the pannier to the bicycle after being mounted to the bicycle.

According to an aspect, the metal plate of the second connection arrangement has an area of 40-400 cm². Optionally, the area of the metal plate is at least 10 times, preferably 20 times, the area of the magnet, or one of the magnets. The attachment arrangement can comprise at least one magnet, at least two magnets or at least tree magnets. If pluralities of magnets are used, they can be positioned at different positions on the bicycle to provide stability and reliability to the connection between the bicycle and the pannier. According to an aspect, the metal plate of the second connection arrangement has a thickness of 1-7 mm.

According to an aspect, the wall of the pannier has an outer side and an inner side. The metal plate of the second connection arrangement can be arranged on the inner side of the wall of the pannier or optionally on the outer side of the wall of the pannier.

According to an aspect, the metal plate of the pannier can comprise a spacer adapted to distance and/or insulate the void of the pannier from a magnetic field imparted by the magnet when connected thereto. The spacer can vary in thickness but a suitable spacer has a total thickness of about 3 mm - 30 mm. The spacer can also have substantially the same extension as the metal plate of the pannier. Optionally the extension of the spacer is adapted to the magnetic field of the magnet.

According to an aspect, the metal plate is advantageously a steel plate, i.e, a ferromagnetic steel plate.

According to an aspect, the magnet is a permanent magnet. Other magnets could be provided by imparting an inductive magnetic field using a coil for example.

According to an aspect, the attachment arrangement comprises a connection member adapted to connect the magnet to the bicycle. The connection member can be a clamp having an annular opening, optionally the clamp is formed by two individual elements. The magnet can be connected to the connection member via a rigid connection or via flexible joint. A flexible joint compensates if the attachment arrangement is connected to the bicycle in a slightly offset manner. The flexible joint permits the magnet to be angled, or tilted, when the pannier is attached thereto, this will permit a full contact between the metal plate and the magnet and provide a secure attachment.

### BRIEF DESCRIPTION OF THE DRAWINGS

Non-limiting embodiments of the present invention will be described with reference to the accompanying figures in which;
figure 1 shows a bicycle with a pannier;
figure 2 shows a pannier having a connection arrangement according to an embodiment of the invention with a view towards the bicycle facing side of the pannier;
figure 3 shows an embodiment of the attachment arrangement attached to the bicycle, to attach, or retain, the lower end of the pannier to the bicycle,
figure 4 shows a cross section of the pannier along the line 1-1, shown in figure 2 and;
figure 5 shows a second embodiment of the attachment arrangement shown in figure 3 and 4.

### DETAILED DESCRIPTION OF PREFERRED EMBODIMENTS

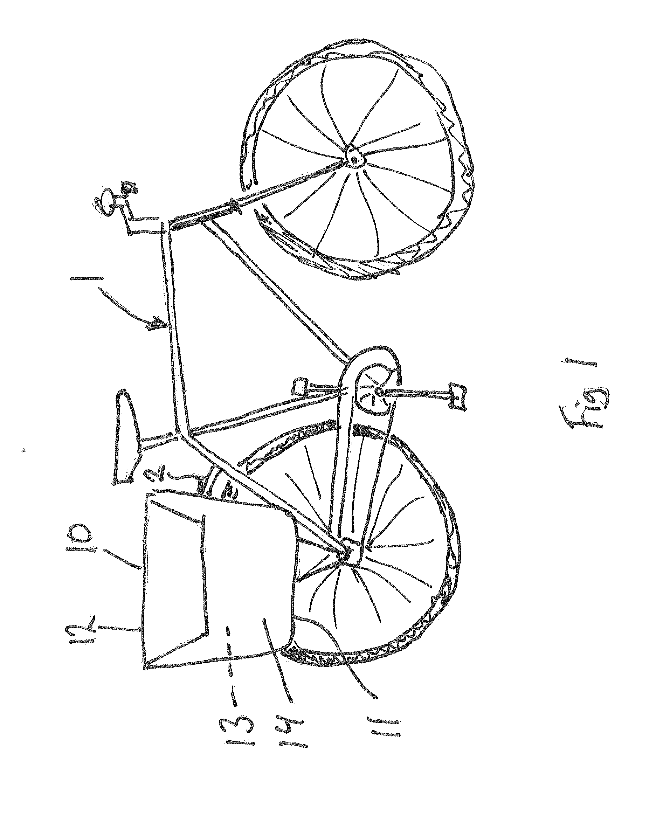

Figure 1 shows a bicycle 1 with a pannier 10 attached to the rack 2 of the bicycle 1. A pannier 10 can be used to pack any item which a rider might find useful such as; clothes; electronic equipment such as MP3/DVD/CD players, mobile phones, computers e.g. laptops, cameras; sports gear; tools; spare parts; water or other liquids; camping equipment; wallets, purses; or the like. The pannier 10 comprises an upper side 11, lower side 12, a bicycle facing side 13 also referred to as the inner side 13, and an outer side 14. The pannier also has a lower end LE and an upper end UE. The upper end UE transcends to the lower end LE at about 50 % of the height of the pannier 10. The pannier 10 also comprises a first and a second vertical side. The size and shape of the pannier 10 can vary, in the shown non-limiting embodiment, the shape of pannier 10 is substantially rectangular, but the pannier 10 could be oval, square formed, or formed in any other way. The pannier is advantageously formed by a more rigid material, at least on the inner side 13 of the pannier 10, with no pliable material to reduce the risk of having material snared in the wheels of the bicycle 1.

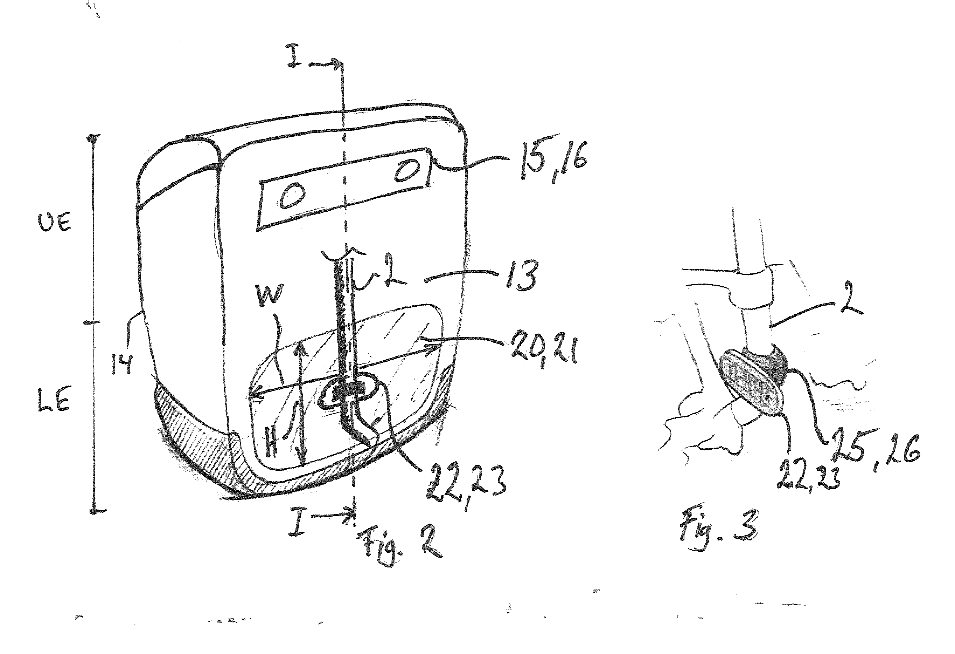

Figure 2 shows a part of the pannier 10 with a view towards the inner side 13 which is intended to be faced towards the bicycle 1 when mounted to the bicycle 1. The pannier 10 comprises a first connection arrangement 15 which provides a first connection 16 for attachment with the rack 2 bicycle 1 (not shown). The first connection arrangement 15 can be substantially any type such as hooks, hook & loop attachment means also known as Velcro attachment means, strings, or other mechanical attachment arrangements by which the pannier 10, and especially the upper end UE of the pannier 10, can be mounted to the bicycle 1 with. The first connection arrangement 15 is adapted to be connected to an existing part of the bicycle, such as the bicycle rack 2 for example. Although the bicycle rack 2 could be attached to the bicycle separately and temporarily, the rack 2 is still considered to be a part of the bicycle 1.

The pannier 10 further comprises a second connection arrangement 20 to provide a second connection for attachment with the bicycle 1. The second connection arrangement comprises a metal plate 20, preferably a steel plate 21, which cooperates in a retaining manner with a magnet 22 attached on the bicycle 1. The magnet 22 can be a permanent magnet 23 for example, e.g. formed by a ferromagnetic material.

To permit easy mounting and attachment of the pannier 10, the metal plate 20 has an area of from 40 cm² to 4.00 cm². Suitable dimensions are a width W of about 30 cm and a height H of about 15 cm. The metal plate can have an area of at least 10 times the area of the magnet 22. As used herein, the area of the magnet is the surface area of the magnet which is intended to be in contact with a corresponding part of the pannier to provide for an attachment by means of magnetic forces.

Figure 3 shows the magnet 22 in greater detail. The magnet 22 comprises a connection member 25 adapted to be connected to a part of the bicycle 1, or rack 2, forming a second connection for the pannier 10. The connection member 25 is formed by a clamp 26 having a substantially annular opening which is adapted to encompass a bar on the rack 2. The clamp 26 is connected and tightened by a screw (not shown). Although the connection member 25 is attached by one or more screws, it is intended to be stationary positioned on the bicycle 1 in terms of that when the pannier 10 is removed from the bicycle 1 the connection member 25 is intended to remain on the bicycle 1, and to remain on the same position.

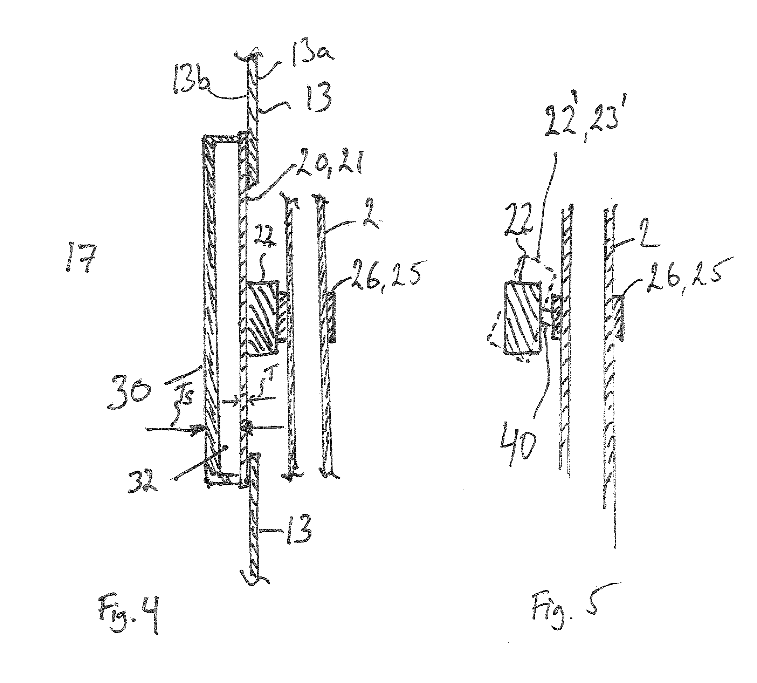

Figure 4 shows a cross section of the pannier 10 of figure 2 and along the line I-I. Figure 4 shows parts of the rack 2, the connection member 25 in the form of a clamp 26, the magnet 21, the inner side 13 of the pannier 13, the metal plate 20, in this case a steel plate 21. The metal plate 20, in this case a steel plate 21, have a thickness T of about 3 mm, but a suitable thickness can be about 1-7 mm. The metal plate 20 could be any ferromagnetic plate such as an iron plate for example, however to reduce weight, lighter ferromagnetic metals can be used.

Figure 4 also shows a spacer 30. The spacer 30 is configured to provide a distance between a void 17, defined by the walls of the pannier 10, and the magnet 22. If a user has items which are sensitive to the magnetic field imparted by the magnet 22, it has been found useful to prevent such material from being positioned to close to the magnet 22. The spacer 30 physically prevents material stored in the pannier 10 from coming too close to the magnet 22. The total thickness Ts of the spacer 30 can be 3 mm - 30 mm thick, dependent on purpose and the selected material.

The spacer 30 can be formed by plastic and simply adhered or screwed onto the side of the steel plate 21 facing the void 17 of the pannier 10. In the shown embodiment of figure 4, the spacer 30 is formed by a housing 31, providing a spacer void 32 in the proximity of the metal plate 20. The spacer void 32 can be filled by suitable material to insulate, or dampen, e.g. from the magnetic field provided by the magnet 22. The space 30 could of course be solid, or have a porous structure such as an open- or closed cell structure.

Figure 5 shows the embodiment of figure 4 but with the addition of a flexible joint 40 between the magnet 22 and the clamp 26. The flexible joint 40 can be a flexible member e.g. formed by rubber or a flexible rubber like material, a ball and socket joint, or any other coupling mechanism, which permits the magnet 22 to be slightly offset with respect to the rack 2 to which it is connected to, and after it has been connected thereto. The ability to be offset is important as the contact between the magnet 22 and the metal plate 20 may require a relatively good contact using the full available area of the magnet 22. A slightly angled, or offset, magnet 22 and permanent magnet 22' is indicated with dashed lines in figure 5. The flexible joint 40 can be form molded directly onto the magnet 22 and the connection member 25, in this case the clamp 26, if it is formed of a thermoplastic rubber like material, or it can be attached in other known manners.

## Claims

1. A kit of a pannier (10) and an attachment arrangement (22, 26) for attaching said pannier (20) to a bicycle (1), said pannier (10) comprising;
a wall (13) defining a void (17);
a first connection arrangement (15, 16) for providing a first connection to said bicycle (1);
a second connection arrangement (20, 21, 22, 23) providing a second connection to said bicycle (1);
**characterized in that**
said second connection arrangement comprises a metal plate (20, 21) arranged on said wall (13) of said pannier (10), and **in that**
said attachment arrangement comprises;
a magnet (22, 23), wherein said magnet (22, 23) is configured to be attached to said bicycle (1) to cooperate in a retaining manner with said metal plate (20, 21) of said second connection arrangement, to connect said pannier (10) to said bicycle (1).

2. The kit according to claim 1, wherein said metal plate (20, 21) of said second connection arrangement has an area of 40-400 cm².

3. The kit according to claims 1 or 2, wherein said metal plate (20, 21) of said second connection arrangement has a thickness of 1-7 mm.

4. The kit according to any one of the preceding claims, wherein said wall (13) of said pannier (10) has an outer side (13a) and an inner side (13b), and wherein said metal plate (20, 21) of said second connection arrangement is arranged on said inner side (13b) of said wall (13) of said pannier (10).

5. The kit according to any one of the preceding claims, wherein said metal plate (20, 21) of said pannier (10) comprises a spacer (30) adapted to distance and/or insulate said void (17) of said pannier (10) from a magnetic field imparted by said magnet (22, 23) when connected thereto.

6. The kit according to claim 5, wherein said spacer (30) is configured to insulate said metal plate (20, 21) from said void (17) of said pannier (10) to reduce a magnetic field imparted by said magnet (22, 23) when connected thereto.

7. The kit according to claim 6, wherein said spacer (30) has a total thickness of about 3 mm - 30 mm.

8. The kit according to any one of the claims 5-7, wherein said spacer (30) substantially has the same extension as said metal plate (20, 21) of said pannier (10).

9. The kit according to any one of the preceding claims, wherein said metal plate (20, 21) is a steel plate (21).

10. The kit according to any one of the preceding claims, wherein said magnet (22, 23) is a permanent magnet (23).

11. The kit according to any one of the preceding claims, wherein said attachment arrangement comprises further comprises a connection member (25, 26) adapted to connect said magnet (22, 23) to said bicycle (1) and in that said magnet (22) is connected to said connection member via a flexible joint (40).
